# FASCICULE DE BREVET EUROPEEN

(11) **EP 1 488 722 B1**
(45) Date de publication et mention de la délivrance du brevet: **21.12.2005**
(21) Numéro de dépôt: 04356074.7
(22) Date de dépôt: 12.05.2004
(51) Int. Cl.: A47J 37/12

(54) **Dispositif de filtration d'un bain de cuisson pour une friteuse électrique a résistance plongeante**
Filtervorrichtung für ein elektrisches Fritiergerät mit Tauchwiderstand
Filter device for an electric deep fat fryer with plunging resistor

(30) Priorité: 19.06.2003 FR 0307415
(43) Date de publication de la demande: 22.12.2004
(73) Titulaire: SEB S.A., 69130 Ecully (FR)
(72) Inventeur: Vuillemot Ducarme, Valérie, 21120 Dienay (FR); Seurat, Frédéric, 21000 Dijon (FR)
(74) Mandataire: Kiehl, Hubert

(56) Documents cités:
- WO-A-94/06335
- US-B1- 6 363 834

## Description

La présente invention concerne le domaine technique des friteuses électriques. La présente invention concerne plus particulièrement les friteuses électriques à résistance plongeante. La présente invention se rapporte à la filtration du bain de cuisson.

Dans les friteuses du type précité, le chauffage du bain de cuisson est assuré par une résistance électrique immergée dans le bain de cuisson. La résistance électrique est généralement amovible par rapport à la cuve contenant le bain de cuisson.

Il est connu du document US 6 363 834 une friteuse électrique comportant une résistance plongeante sur laquelle est disposé un tamis filtrant.

Cette disposition permet de récupérer les résidus de cuisson dans le tamis filtrant. Ces résidus peuvent être retirés du bain de cuisson avec la résistance plongeante portant le tamis filtrant.

Cette réalisation présente toutefois l'inconvénient de favoriser la carbonisation des résidus de cuisson.

Le document WO-A-94/06 335 décrit un dispositif de filtration selon le préambule de la revendication indépendante 1.

L'objet de la présente invention est de filtrer le bain de cuisson d'une friteuse électrique à résistance plongeante d'une manière particulièrement simple.

Un autre objet de la présente invention est de limiter la dégradation du bain de cuisson d'une friteuse électrique à résistance plongeante.

Ces objets sont atteints avec un dispositif de filtration d'un bain de cuisson pour une friteuse électrique, comportant un tamis filtrant s'étendant au dessous d'une résistance électrique plongeante prévue pour être disposée dans une cuve contenant un bain de cuisson, du fait que le tamis filtrant est relié à la résistance électrique plongeante par au moins un organe de maintien. Cette disposition permet de placer le tamis filtrant dans une zone plus froide du bain de cuisson. La carbonisation des résidus recueillis dans le tamis filtrant peut ainsi être fortement réduite, voire évitée, ce qui permet de conserver une meilleure qualité de bain de cuisson. L'opération de filtration s'effectue simplement lorsque la résistance électrique plongeante est retirée du bain de cuisson.

Avantageusement alors, le tamis filtrant comporte une paroi filtrante montée à distance de la résistance électrique plongeante. Cette disposition permet de limiter l'échauffement direct de la paroi filtrante, et contribue ainsi à réduire la dégradation des résidus.

Avantageusement encore, le tamis filtrant est concave. Cette disposition permet de mieux retenir les résidus lors de la filtration.

Avantageusement encore, pour faciliter le nettoyage, le tamis filtrant est monté amovible par rapport à la résistance électrique plongeante.

Avantageusement encore le tamis filtrant comporte le ou au moins l'un des organes de maintien coopérant avec la résistance électrique plongeante. En alternative, ledit organe de maintien pourrait être issu de la résistance électrique plongeante.

Avantageusement alors ledit organe de maintien présenté au moins une zone de retenue coopérant avec la résistance électrique plongeante et au moins une zone de fixation avec le tamis filtrant.

Avantageusement alors ladite zone de retenue est déformable. Cette disposition permet de retirer le tamis filtrant de la résistance électrique plongeante.

Avantageusement encore ledit organe de maintien présente une zone de liaison entre ladite zone de retenue et ladite zone de fixation. Cette disposition permet d'établir un frein thermique entre la résistance électrique plongeante et le tamis filtrant.

Avantageusement alors ladite zone de liaison est déformable. Cette disposition permet également de retirer le tamis filtrant de la résistance électrique plongeante.

Avantageusement encore, pour faciliter le retrait du tamis filtrant, ladite zone de retenue est prolongée par une zone de manoeuvre.

En alternative, l'organe de maintien peut être relativement rigide, la résistance électrique plongeante pouvant alors être légèrement déformée pour être dégagée d'au moins une des zones de retenue.

Selon une forme de réalisation avantageuse, ledit organe de maintien est fixé sur une paroi filtrante du tamis filtrant. De préférence alors ledit organe de maintien comporte une zone de liaison entre la zone de fixation et la zone de retenue.

Selon une autre forme de réalisation avantageuse, ledit organe de maintien est fixé sur une bordure périphérique du tamis filtrant. Ledit organe de maintien peut également comporter une zone de liaison entre la zone de fixation et la zone de retenue.

Les objets de l'invention sont également atteints avec une friteuse électrique comportant une cuve prévue pour recevoir un bain de cuisson, une résistance électrique plongeante prévue pour être disposée dans la cuve, et un tamis filtrant, dans laquelle le tamis filtrant appartient à un dispositif de filtration selon les caractéristiques précitées.

L'invention sera mieux comprise à l'étude d'un exemple de réalisation et de deux variantes, pris à titre nullement limitatif, illustrés dans les figures annexées dans lesquelles :
- la figure 1 est une vue en éclaté d'un exemple de réalisation d'une friteuse comportant un dispositif de filtration d'un bain de cuisson selon l'invention,
- la figure 2 est une vue agrandie du dispositif de filtration d'un bain de cuisson illustré à la figure 1,
- la figure 3 est une variante de réalisation du dispositif de filtration d'un bain de cuisson illustré à la figure 2,
- la figure 4 est une autre variante de réalisation du dispositif de filtration d'un bain de cuisson illustré à la figure 2.

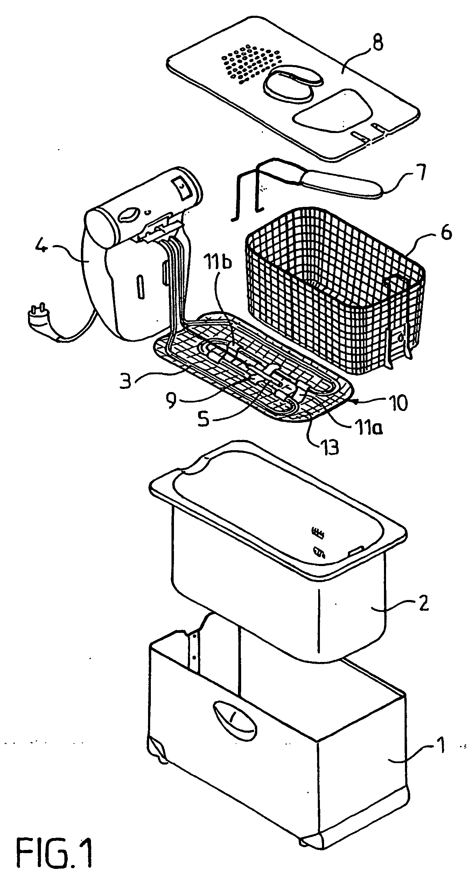

La figure 1 montre une friteuse électrique comportant un logement 1 recevant une cuve 2 destinée à contenir un bain de cuisson tel qu'un bain d'huile ou un bain de matière grasse. Une résistance électrique plongeante 3 est prévue pour chauffer le bain de cuisson. La résistance électrique plongeante 3 est issue d'un boîtier de commande 4. Une sonde de température 5 est agencée entre les brins de la résistance électrique plongeante 3. La sonde de température 5 est par exemple associée à un thermostat à bulbe ou à une régulation électronique de température. Un panier de cuisson 6 associé à une poignée 7 est prévu pour contenir les aliments à frire. Un couvercle 8 est prévu pour fermer la cuve 2.

La friteuse électrique montrée à la figure 1 comporte un tamis filtrant 10 appartenant à un dispositif de filtration du bain de cuisson. Le tamis filtrant 10 est solidaire de la résistance électrique plongeante 3. Le tamis filtrant 10 s'étend au dessous de la résistance électrique plongeante 3. Le tamis filtrant 10 présente une forme concave, pour mieux retenir les résidus de cuisson issus du panier de cuisson 6. Le tamis filtrant 10 est agencé à distance de la résistance électrique plongeante 3, pour éviter l'échauffement du tamis filtrant 10 et des résidus de cuisson recueillis dans le tamis filtrant 10.

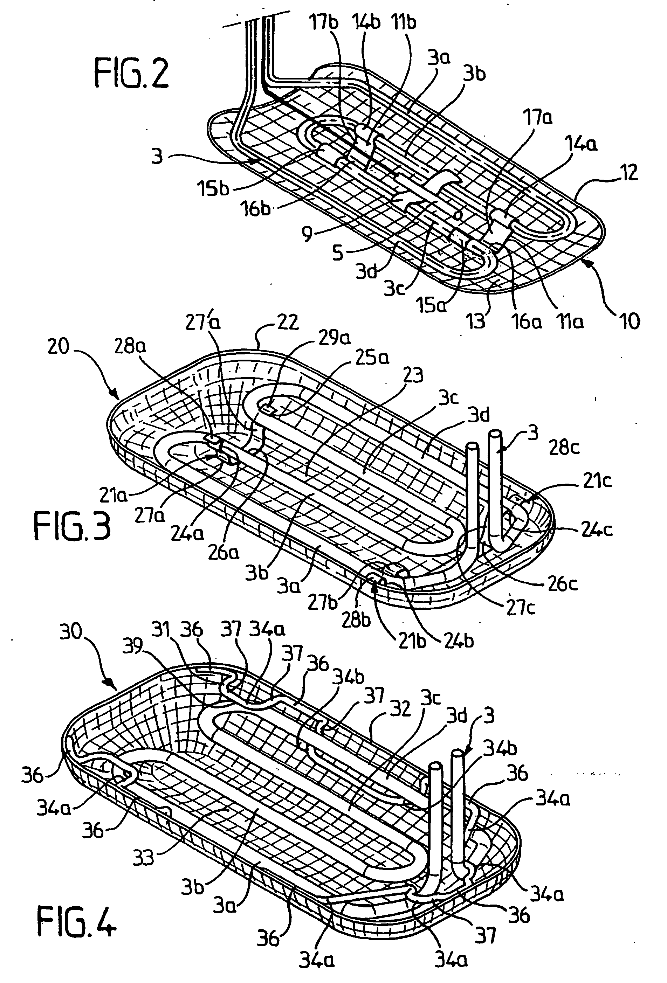

Plus particulièrement, tel que mieux visible à la figure 2, la résistance électrique plongeante 3 présente plusieurs brins 3a, 3b, 3c, 3d parallèles raccordés par des parties recourbées. Deux brins intérieurs 3b, 3c sont réunis par l'une de leurs extrémités et sont raccordés par leur autre extrémité à l'un des brins extérieurs 3a, 3d. La sonde de température 5 est montée entre les deux brins intérieurs 3b, 3c au moyen d'une attache transversale 9.

Le tamis filtrant 10 est relié à la résistance électrique plongeante 3 par deux organes de maintien 11a, 11b. Le tamis filtrant 10 présente une bordure périphérique 12. La bordure périphérique 12 entoure une paroi filtrante 13 prévue pour recueillir les résidus de cuisson tombés du panier de cuisson 6. La paroi filtrante 13 s'étend en dessous de la résistance électrique plongeante 3. La paroi filtrante 13 présente une forme concave. La paroi filtrante 13 est par exemple réalisée par un maillage. Le maillage du tamis filtrant 10 est alors de préférence plus fin que le maillage du panier de cuisson 6. Les dimensions du tamis filtrant 10 sont prévues pour laisser de préférence un espace minimum avec les parois latérales de la cuve 2.

Les organes de maintien 11a, 11b présentent une forme en V. Les deux extrémités supérieures des organes de maintien 11a, 11b forment des zones de retenue 14a, 14b, 15a, 15b de la résistance électrique plongeante 3. La partie centrale inférieure de chacun des organes de maintien 11a, 11b forme une zone de fixation 16a, 16b sur la paroi filtrante 13. Des zones de liaison 17a, 17b sont prévues entre chacune des zones de retenue 14a, 14b, 15a, 15b et les zones de fixation 16a, 16b correspondantes. Les organes de maintien 11a, 11b sont par exemple formés par des languettes métalliques en acier inoxydable soudées sur la paroi filtrante 13.

Lorsque l'utilisateur retire la résistance électrique plongeante 3 de la cuve 2 contenant un bain de cuisson, le tamis filtrant 10 agencé sous la résistance électrique plongeante 3 recueille les résidus de cuisson tels que par exemple les morceaux grillés tombés dans le bain de cuisson lors du retrait du panier de cuisson 6 de la cuve 2. Le tamis filtrant 10 disposé à distance de la résistance électrique plongeante 3, grâce notamment aux zones de liaison 17a, 17b et à la conformation concave de la paroi filtrante 13, permet de recueillir les résidus de cuisson dans une zone plus froide du bain de cuisson. La dégradation des résidus de cuisson est ainsi ralentie, ce qui permet de conserver une meilleure qualité de bain de cuisson.

Deux variantes de réalisation montrant des tamis filtrants 20 , 30 montés amovibles par rapport à la résistance électrique plongeante 3 sont illustrées aux figures 3 et 4.

La variante de réalisation illustrée à la figure 3 diffère de l'exemple de réalisation illustré à la figure 2 en ce que le tamis filtrant 20 présentant une bordure périphérique 22 entourant une paroi filtrante 23 est relié à la résistance électrique plongeante 3 par trois organes de maintien 21a, 21b, 21c.

Chaque organe de maintien 21a, 21b, 21c comporte une zone de fixation 26a, 26c avec la paroi filtrante 23, la zone de fixation de l'organe de maintien 21b n'étant pas visible sur la figure 3.

L'organe de maintien 21a est agencé sur l'axe longitudinal du tamis filtrant 20. L'organe de maintien 21a est formé par une languette en U fixée en sa partie inférieure au tamis filtrant 20. Les branches de la languette présentent deux conformations concaves internes formant des zones de retenue 24a, 25a. Les zones de retenue 24a, 25a viennent enserrer les faces latérales externes des brins intérieurs 3b, 3c de la résistance électrique plongeante 3. Les extrémités libres de la languette forment des zones de manoeuvre 28a, 29a permettant de libérer les zones de retenue 24a, 25a de la résistance électrique plongeante 3. Les branches de la languette forment des zones de liaison 27a, 27'a entre les zones de retenue 24a, 25a et la zone de fixation 26a.

Les organes de maintien 21b, 21c sont agencés de part et d'autre de l'axe longitudinal du tamis filtrant 20, à distance de l'organe de maintien 21a. Les organes de maintien 21b, 21c sont formés par des languettes comportant une branche s'étendant à partir de leur zone de fixation. Chaque branche présente une conformation concave supérieure formant une zone de retenue 24b, 24c. Ces conformations concaves s'étendent sur plus de 180° pour permettre la retenue du panier filtrant 20. Les zones de retenue 24b, 24c viennent enserrer du côté inférieur les brins extérieurs 3a, 3d de la résistance électrique plongeante 3. L'extrémité libre de chacune des languettes forment une zone de manoeuvre 28b, 28c permettant de libérer les zones de retenue 24b, 24c de la résistance électrique plongeante 3. Les languettes forment des zones de liaison 27b, 27c entre les zones de retenue 24b, 24c et les zones de fixation correspondantes.

Les organes de maintien 21a, 21b, 21c sont déformables au niveau des zones de retenue 24a, 25a, 24b, 24c et/ou des zones de liaison 27a, 27'a, 27b, 27c, pour permettre à l'utilisateur de retirer le tamis filtrant 10 de la résistance électrique plongeante 3, par exemple pour le nettoyage.

La variante de réalisation illustrée à la figure 4 diffère de l'exemple de réalisation illustré à la figure 2 et de la variante de réalisation illustrée à la figure 3 en ce que le tamis filtrant 30 présentant une bordure périphérique 32 entourant une paroi filtrante 33 est relié à la résistance électrique plongeante 3 par un organe de maintien 31 fixé à la bordure périphérique 32.

L'organe de maintien 31 est formé par une tige recourbée en plusieurs points, réalisée par exemple en acier inoxydable. L'organe de maintien 31 comporte deux parties symétriques de part et d'autre de l'axe longitudinal du tamis filtrant 30. L'organe de maintien 31 est fixé à la bordure périphérique 32 dans des zones de fixation 36, par exemple par soudure. L'organe de maintien 31 comporte plusieurs protubérances intérieures s'écartant de la bordure périphérique. Les protubérances intérieures forment des zones de retenue 34a, 34b. Les zones de retenue 34a maintiennent par le dessus les brins extérieurs 3a, 3d de la résistance électrique plongeante 3. Les zones de retenue 34b maintiennent par le dessous les brins extérieurs 3a, 3d de la résistance électrique plongeante 3. Des zones de liaison 37 sont agencées entre les zones de fixation 36 et les zones de retenue 34a, 34b. La résistance électrique plongeante 3 est ainsi maintenue à distance de la paroi filtrante 33 et du bord périphérique 32.

L'élasticité de la résistance électrique plongeante 3 permet un dégagement latéral des brins extérieurs 3a, 3d de la résistance électrique plongeante 3 par rapport à l'organe de maintien.

A titre de variante complémentaire, les zones de retenue 34a, 34b pourraient être formées par plusieurs organes de maintien 31 séparés.

A titre de variante complémentaire, d'autres géométries peuvent être envisagées pour la résistance électrique plongeante 3 et pour les organes de maintien 11a, 11b ; 21a, 21b, 21c ; 31.

A titre de variante complémentaire, les organes de maintien 11a, 11b ; 21a, 21b , 21c ; 31 ne sont pas nécessairement tous fixés uniquement sur la paroi filtrante du tamis filtrant ou uniquement sur la bordure périphérique du tamis filtrant.

A titre de variante complémentaire, au moins un organe de maintien déformable peut être issu du tamis filtrant 10, le déplacement de la résistance électrique plongeante 3 permettant le dégagement du ou des autres organes de maintien du panier filtrant.

A titre de variante complémentaire, la paroi filtrante 13, 23, 33 n'est pas nécessairement formée par un maillage. La paroi filtrante peut notamment être formée par une paroi perforée.

A titre de variante complémentaire, les organes de maintien pourraient être issus de la résistance électrique plongeante 3 pour coopérer avec le tamis filtrant 10 ; 20 ; 30.

A titre de variante complémentaire, la cuve 2 peut comporter un moyen de retenue prévu pour suspendre le tamis filtrant en position relevée au dessus de bain de cuisson, pour permettre l'égouttage. Le moyen de retenue est par exemple un crochet ou un ergot issu d'une face latérale intérieure de la cuve. Le moyen de retenue peut coopérer avec le tamis filtrant et/ou avec la résistance. Le moyen de retenue est de préférence disposé du côté opposé au boîtier de commande de la résistance électrique plongeante.

Le dispositif de filtration d'un bain de cuisson selon l'invention peut être formé par un tamis filtrant prévu pour être monté au dessous d'une résistance électrique plongeante. Le dispositif de filtration forme alors un accessoire qui peut être associé à une résistance électrique plongeante.

Le dispositif de filtration d'un bain de cuisson selon l'invention peut également comprendre un tamis filtrant et une résistance électrique plongeante, le tamis filtrant étant monté de manière amovible ou non au dessous de ladite résistance électrique plongeante.

La présente invention n'est nullement limitée à l'exemple de réalisation décrit et à ses variantes, mais englobe de nombreuses modifications dans le cadre des revendications.

## Revendications

1. Dispositif de filtration d'un bain de cuisson pour une friteuse électrique, comportant un tamis filtrant (10 ; 20 ; 30) s'étendant au dessous d'une résistance électrique plongeante (3) prévue pour être disposée dans une cuve (2) contenant un bain de cuisson, **caractérisé en ce que** le tamis filtrant (10 ; 20 ; 30) est relié à la résistance électrique plongeante (3) par au moins un organe de maintien (11a, 11b ; 21a, 21b, 21c ; 31).

2. Dispositif de filtration d'un bain de cuisson selon la revendication 1, **caractérisé en ce que** le tamis filtrant (10 ; 20 ; 30) comporte une paroi filtrante (13 ; 23 ; 33) montée à distance de la résistance électrique plongeante (3).

3. Dispositif de filtration d'un bain de cuisson selon l'une des revendications 1 ou 2, **caractérisé en ce que** le tamis filtrant (10 ; 20 ; 30) est concave.

4. Dispositif de filtration d'un bain de cuisson selon l'une des revendications 1 à 3, **caractérisé en ce que** le tamis filtrant (10 ; 20 ; 30) est monté amovible par rapport à la résistance électrique plongeante (3).

5. Dispositif de filtration d'un bain de cuisson selon l'une des revendications 1 à 4, **caractérisé en ce que** le tamis filtrant (10 ; 20 ; 30) comporte le ou au moins l'un des organes de maintien (11a, 11b; 21a, 21b, 21c; 31) coopérant avec la résistance électrique plongeante (3).

6. Dispositif de filtration d'un bain de cuisson selon la revendication 5, **caractérisé en ce que** ledit organe de maintien (11a, 11b ; 21a, 21b, 21c ; 31) présente au moins une zone de retenue (14a, 14b, 15a, 15b ; 24a, 25a, 24b, 24c ; 34a, 34b) coopérant avec la résistance électrique plongeante (3) et au moins une zone de fixation (16a, 16b ; 26a, 26c ; 36) avec le tamis filtrant (10 ; 20 ; 30).

7. Dispositif de filtration d'un bain de cuisson selon la revendication 6, **caractérisé en ce que** ladite zone de retenue (24a, 25a, 24b, 24c) est déformable.

8. Dispositif de filtration d'un bain de cuisson selon l'une des revendications 6 ou 7, **caractérisé en ce que** ledit organe de maintien (11a, 11b ; 21a, 21b, 21c ; 31) présente une zone de liaison (17a, 17b ; 27a, 27'a, 27b, 27c ; 37) entre ladite zone de retenue (14a, 14b, 15a, 15b; 24a, 25a, 24b, 24c) et ladite zone de fixation (16a, 16b ; 26a, 26c ; 36).

9. Dispositif de filtration d'un bain de cuisson selon la revendication 8, **caractérisé en ce que** ladite zone de liaison (27a, 27'a, 27b, 27c) est déformable.

10. Dispositif de filtration d'un bain de cuisson selon l'une des revendications 6 à 9, **caractérisé en ce que** ladite zone de retenue est prolongée par une zone de manoeuvre (28a, 29a, 28b, 28c).

11. Dispositif de filtration d'un bain de cuisson selon l'une des revendications 5 à 10, **caractérisé en ce que** ledit organe de maintien (11a, 11b ; 21a, 21b, 21c) est fixé sur une paroi filtrante (13 ; 23) du tamis filtrant (10 ; 20).

12. Dispositif de filtration d'un bain de cuisson selon l'une des revendications 5 à 10, **caractérisé en ce que** ledit organe de maintien (31) est fixé sur une bordure périphérique (32) du tamis filtrant (30).

13. Friteuse électrique comportant une cuve (2) prévue pour recevoir un bain de cuisson, une résistance électrique plongeante (3) prévue pour être disposée dans la cuve, et un tamis filtrant (10 ; 20 ; 30), **caractérisé en ce que** le tamis filtrant (10 ; 20 ; 30) appartient à un dispositif de filtration selon l'une des revendications 1 à 12.

## Patentansprüche

1. Vorrichtung zum Filtern eines Garbads für eine elektrische Friteuse, mit einem Filtriersieb (10; 20; 30), das sich unter einem elektrischen Tauchwiderstand (3) erstreckt, der dazu vorgesehen ist, in einer Wanne (2) angeordnet zu sein, die ein Garbad enthält, **dadurch gekennzeichnet, dass** das Filtriersieb (10; 20; 30) über mindestens ein Halteorgan (11a, 11b; 21a, 21b, 21c; 31) mit dem elektrischen Tauchwiderstand (3) verbunden ist.

2. Vorrichtung zum Filtern eines Garbads nach Anspruch 1, **dadurch gekennzeichnet, dass** das Filtriersieb (10; 20; 30) eine Filtrierwand (13; 23; 33) aufweist, die von dem elektrischen Tauchwiderstand (3) beabstandet angeordnet ist.

3. Vorrichtung zum Filtern eines Garbads nach Anspruch 1 oder 2, **dadurch gekennzeichnet, dass** das Filtriersieb (10; 20; 30) konkav ist.

4. Vorrichtung zum Filtern eines Garbads nach einem der Ansprüche 1 bis 3, **dadurch gekennzeichnet, dass** das Filtriersieb (10; 20; 30) in Bezug auf den elektrischen Tauchwiderstand (3) abnehmbar angebracht ist.

5. Vorrichtung zum Filtern eines Garbads nach einem der Ansprüche 1 bis 4, **dadurch gekennzeichnet, dass** das Filtriersieb (10; 20; 30) das oder mindestens eines der Halteorgane (11a, 11b; 21a, 21b, 21c; 31) aufweist, die mit dem elektrischen Tauchwiderstand (3) zusammenwirken.

6. Vorrichtung zum Filtern eines Garbads nach Anspruch 5, **dadurch gekennzeichnet, dass** das Halteorgan (11a, 11b; 21a, 21b, 21c; 31) mindestens einen Rückhaltebereich (14a, 14b, 15a, 15b; 24a, 25a, 24b, 24c; 34a, 34b) aufweist, der mit dem elektrischen Tauchwiderstand (3) zusammenwirkt, sowie mindestens einen Bereich (16a, 16b; 26a, 26c; 36) zur Befestigung an dem Filtriersieb (10; 20; 30).

7. Vorrichtung zum Filtern eines Garbads nach Anspruch 6, **dadurch gekennzeichnet, dass** der Rückhaltebereich (24a, 25a, 24b, 24c) verformbar ist.

8. Vorrichtung zum Filtern eines Garbads nach Anspruch 6 oder 7, **dadurch gekennzeichnet, dass** das Halteorgan (11a, 11b; 21a, 21b, 21c; 31) zwischen dem Rückhaltebereich (14a, 14b, 15a, 15b; 24a, 25a, 24b, 24c) und dem Befestigungsbereich (16a, 16b; 26a, 26c; 36) einen Verbindungsbereich (17a, 17b; 27a, 27'a, 27b, 27c; 37) aufweist.

9. Vorrichtung zum Filtern eines Garbads nach Anspruch 8, **dadurch gekennzeichnet, dass** der Verbindungsbereich (27a, 27'a, 27b, 27c) verformbar ist.

10. Vorrichtung zum Filtern eines Garbads nach einem der Ansprüche 6 bis 9, **dadurch gekennzeichnet, dass** der Rückhaltebereich durch einen Betätigungsbereich (28a, 29a, 28b, 28c) verlängert ist.

11. Vorrichtung zum Filtern eines Garbads nach einem der Ansprüche 5 bis 10, **dadurch gekennzeichnet, dass** das Halteorgan (11a, 11b; 21a, 21b, 21c) an einer Filtrierwand (13; 23) des Filtriersiebs (10; 20) befestigt ist.

12. Vorrichtung zum Filtern eines Garbads nach einem der Ansprüche 5 bis 10, **dadurch gekennzeichnet, dass** das Halteorgan (31) an einem Umfangsrand (32) des Filtriersiebs (30) befestigt ist.

13. Elektrische Friteuse mit einer Wanne (2), die dazu vorgesehen ist, ein Garbad aufzunehmen, einem elektrischen Tauschwiderstand (3), der dazu vorgesehen ist, in der Wanne angeordnet zu sein, und mit einem Filtriersieb (10; 20; 30), **dadurch gekennzeichnet, dass** das Filtriersieb (10; 20; 30) zur einer Filtervorrichtung nach einem der Ansprüche 1 bis 12 gehört.

## Claims

1. A filter device for filtering a frying bath for an electrical deep fryer, said filter device comprising a filter screen (10; 20; 30) extending below an immersion resistor (3) designed to be disposed in a vessel (2) containing a frying bath, said filter device being **characterized in that** the filter screen (10; 20; 30) is coupled to the immersion resistor (3) by at least one holding member (11a, 11b; 21a, 21b, 21c; 31).

2. A filter device for filtering a frying bath according to claim 1, **characterized in that** the filter screen (10; 20; 30) comprises a filter membrane (13; 23; 33) mounted at some distance from the immersion resistor (3).

3. A filter device for filtering a frying bath according to claim 1 or claim 2, **characterized in that** the filter screen (10; 20; 30) is concave.

4. A filter device for filtering a frying bath according to any one of claims 1 to 3, **characterized in that** the filter screen (10; 20; 30) is mounted removably relative to the immersion resistor (3).

5. A filter device for filtering a frying bath according to any one of claims 1 to 4, **characterized in that** the filter screen (10; 20; 30) further comprises the holding member or at least one of the holding members (11a, 11b; 21a, 21b, 21c; 31) co-operating with the immersion resistor (3).

6. A filter device for filtering a frying bath according to claim 5, **characterized in that** said holding member (11a, 11b; 21a, 21b, 21c; 31) has at least one retaining zone (14a, 15b, 15a, 15b; 24a, 25a, 24b, 24c; 34a, 34b) co-operating with the immersion resistor (3) and at least one fastening zone (16a, 16b; 26a, 26c; 36) for fastening to the filter screen (10; 20; 30).

7. A filter device for filtering a frying bath according to claim 6, **characterized in that** said retaining zone (24a, 25a, 24b, 24c) is deformable.

8. A filter device for filtering a frying bath according to claim 6 or claim 7, **characterized in that** said holding member (11a, 11b; 21a, 21b, 21c; 31) has a link zone (17a, 17b; 27a, 27'a, 27b, 27c; 37) between said retaining zone (14a, 14b, 15a, 15b; 24a, 25a, 24b, 24c) and said fastening zone (16a, 16b; 26a, 26c; 36).

9. A filter device for filtering a frying bath according to claim 8, **characterized in that** said link zone (27a, 27'a, 27b, 27c) is deformable.

10. A filter device for filtering a frying bath according to any one of claims 6 to 9, **characterized in that** said retaining zone is extended by a drive zone (28a, 29a, 28b, 28c).

11. A filter device for filtering a frying bath according to any one of claims 5 to 10, **characterized in that** said holding member (11a, 11b; 21a, 21b, 21c) is fastened to a filter membrane (13; 23) of the filter screen (10; 20).

12. A filter device for filtering a frying bath according to any one of claims 5 to 10, **characterized in that** said holding member (31) is fastened to a peripheral rim (32) of the filter screen (30).

13. An electrical deep fryer comprising a vessel (2) designed to receive a frying bath, an immersion resistor (3) designed to be disposed in the vessel, and a filter screen (10; 20; 30), said electrical deep fryer being **characterized in that** the filter screen (10; 20; 30) belongs to a filter device according to any one of claims 1 to 12.
